Europäisches Patentamt

European Patent Office

Office européen des brevets

(11) Publication number: **0 416 501 A2**

# (12) EUROPEAN PATENT APPLICATION

(21) Application number: 90116872.4

(22) Date of filing: 03.09.90

(51) Int. Cl.⁵: **C08G 18/40,** C08G 18/62,
C08G 18/44, C09D 175/04,
//(C09D175/04,161:20)

(30) Priority: 01.09.89 JP 227098/89
05.09.89 JP 229692/89

(43) Date of publication of application:
**13.03.91 Bulletin 91/11**

(84) Designated Contracting States:
**CH DE FR GB IT LI NL**

(71) Applicant: DAICEL CHEMICAL INDUSTRIES,
LTD.
1, Teppo-cho Sakai-shi
Osaka 590(JP)

(72) Inventor: Maruyama, Toshihide
4-22 Shikigaoka 9-chome
Hatsukaichi-shi, Hiroshima(JP)
Inventor: Watanabe, Shoji
145 Inomiyacho
Shizuoka-shi, Shizuoka(JP)

(74) Representative: Kolb, Helga, Dr. Dipl.-Chem. et
al
Hoffmann, Eitle & Partner Patentanwälte
Arabellastrasse 4
W-8000 München 81(DE)

(54) **A composition for coating.**

(57) A composition for coating having an extensible property and outdoor durability of the coating layers under low temperature conditions is disclosed.

The composition for coating comprises a fluorine-containing copolymer having hydroxyl groups, a polycaprolactone polyol or a polycarbonate diol, and a hardener having at least one functional group capable of reacting with a hydroxyl group.

Coating layers formed by the composition have not only an extensible property under low temperature conditions, but also excellent outdoor durability and mechanical properties.

The composition for coating and coating layers formed therefrom are suitable for fields in which excellent outdoor durability is a primary requirement, for example, bumpers, soft materials, and elastic materials such as internal parts for automobiles, and additionally, for concrete structures and mortar cement structures.

EP 0 416 501 A2

# A COMPOSITION FOR COATING

## FIELD OF THE INVENTION

The present invention relates to a composition for coating and coating layers which provide not only excellent outdoor durability and mechanical properties, but also an extensible property and ductility under low temperature conditions.

The composition for coating and coating layers in accordance with the invention are suitable for fields in which an excellent outdoor durability is a primary requirement, for example, bumpers or soft materials and or elastic materials such as internal parts for automobiles, in addition, for concrete structures or mortar cement structures.

## BACKGROUND OF THE INVENTION

In recent years, compositions for coating and coating layers having an excellent extensible property and further excellent outdoor durability have been desired, particularly for coating layers for structural materials to be used outside.

In order to satisfy the above described characteristics, a urethane composition for coating has been well known, which comprises the addition of a plasticizer into a coating composition having excellent durability for the purpose of an improvement of extensible property, or mixing a non-yellowing polyisocyanate compound with an acrylic resin having hydroxyl groups and low glass transition temperatures or a polyester resin.

However, it has been difficult to produce a composition for coating and coating layers having the two desirable properties of extensibility and an outdoor durability.

For example, if it is intended that extensibility is improved, then the outdoor durability tends to lower.

Accordingly, it has been believed theoretically difficult that the two properties could be sufficiently improved at the same time.

It has also been known that a fluorine-containing composition for coating, comprising as main components a fluorine-containing polyol and a hardener of a polyvalent isocyanate has an excellent outdoor durability in the coated layer, as disclosed in Japanese Application Publication (Kokai) No. 1980/108189 and Japanese Application Publication (Kokai) No. 1981/133269.

However, the coating layer is not sufficient in extensibility.

Still further, it is known that a fluorine-containing composition for coating wherein the main component comprises a modification of a fluorine-containing copolymer having hydroxyl groups with a lactone compound or an alkyd resin, and a hardener of a polyvalent isocyanate compound, is excellent in solubility with other materials such as solvents and also in flexibility and in outdoor durability in a coating layer formed therefrom, as disclosed in Japanese Application Publication (Kokai) No. 1984/96177 and Japanese Application Publication (Kokai) No. 1986/247727, etc.

However, the modification processes of the fluorine-containing composition for coating are complicated, and the composition becomes expensive in price.

More specifically, for example, in the case that the fluorine-containing copolymer is modified with the lactone compound or the alkyd resin, only a high polar solvent such as acetone, methylethyl ketone, methyl isobutyl ketone, ethyl acetate and or butyl acetate, etch can he used because of poor solubility. Accordingly, high reaction temperatures cannot be applied, because such high polar solvents usually have lower boiling point.

Thereby, the lactone-modified fluorine-containing copolymer cannot be produced by economical reaction conditions.

## SUMMARY OF THE INVENTION

It is an object of the present invention to provide a composition for coating and coating layers formed therefrom, which can be produced on an economical basis, having an extensible property and outdoor durability of the coating layers under low temperature conditions.

The object of the present invention is achieved in accordance with a composition for coating and a coating layer having an extensible property provided thereby, said composition consisting essentially of a mixture which comprises

(a) a fluorine-containing copolymer having hydroxyl groups,

(b) a polycarbonated diol, a polycaprolactone diol, or a polycaprolactone triol having a number average molecular weight of from 300 to 3000, and

(c) a hardener having at least one functional group capable of reacting with a hydroxyl group.

## DETAILED DESCRIPTION OF THE INVENTION

The present invention is now described in more detail. The coating layer according to the invention is formed using a composition according to the invention consisting essentially of a mixture which comprises three essential components.

A first component (a) in the present composition for coating, which is a fluorine-containing copolymer having hydroxyl groups, includes a copolymer comprising copolymerizing a fluoroolefin with cyclohexyl vinyl ether, an alkyl vinyl ether, and a hydroxyalkyl vinyl ether as disclosed in Japanese Application Publication (Kokai) No. 1982/34107(corresponding to U.S. Patent 4,345,057), (Kokai) 1984/102961 and (Kokai) 1984/102962.

For example, U.S. Patent 4,345,057 discloses a fluorine-containing copolymer which comprises from 40 to 60 mol % of fluoroolefin units, from 5 to 45 mol % of cyclohexyl vinyl ether units, and from 5 to 45 mol % of hydroxyalkyl vinyl ether units.

Furthermore, Japanese Application Publication (Kokai) 1984/102961 and (Kokai) 1984/102962 disclose a fluorine-containing copolymer which comprises from 5 to 70 mol % of a fluoroolefin, from 10 to 95 mol % of a vinyl ester of monocarboxylic acid, such as vinyl propionate, and from 0 to 40 mol % of $\beta$-hydroxyethyl-(metha)acrylate.

More specifically describing, for example, it includes Lumifron LF 100, LF 200, LF 400, LF 600 and or LF 700, etc., which are manufactured by Asahi Glass Co., Ltd., on a commercial basis.

One of a second essential component(b) in the present composition for coating, which is a polycarbonatediol having a number average molecular weight of from 300 to 3000, includes the following compounds.

Various kinds of polycarbonate diols are disclosed in detail in the specification of, for example, Japanese Application(Shutsugan) No.1988/127083, Japanese Application(Shutsugan) No.1988/113236. U.S.patent 4,435,450, 4,377,670, 4,105,641, 4,103,070, 4,024,113, 4,101,529, 3,879,348, and GB 1,525,933, etc.

For example, the abstract of Shutsugan 1988/127083 describes a carbonate diol composition obtained by the reaction of a compound selected from the group consisting of compounds which require dehydrochlorination, alkylene carbonates, diaryl carbonates, and dialkyl carbonates, with an aliphatic diol which comprises a mixture of (1) from 20 to 80 mol % of a polyvalent alcohol in which the number of carbon atoms in the main polymer chain is from 3 to 20 and having at least one side chain, and (2) from 80 to 20 mol % of 1,6-hexanediol, which is characterized in being liquid at ordinary temperatures or an easily liquified solid at relatively low temperature conditions.

The chemical formula of the above described polycarbonate polyol is represented by

$$HO-R1-(-O\overset{O}{\overset{\|}{C}}O-R1-)_n-OH \text{ or } HO-R1(-O\overset{O}{\overset{\|}{C}}O-R2-O\overset{O}{\overset{\|}{C}}O-R1-)_n-OH.$$

[wherein R1 and R2 are an alkyl group or alkylene group ]

In this regard, products such as Placcel CD-210HL, CD-220HL and CD-220PL, etc., which are manufactured by Daicel Chemical Industries, Ltd., on a commercial basis, can be used.

Another compound which may constitute component(b) in the composition for coating, a polycaprolactone diol or a triol having a number average molecular weight of from 300 to 3000, can be produced by a ring-opening polymerization of caprolactone monomer with an initiating agent such as a divalent or a trivalent alcohol in the presence of a catalyst.

The initiating agent includes a divalent alcohol such as ethylene glycol, diethylene glycol, propylene glycol, 1,3-butylene glycol, neopentyl glycol, cyclohexanedimethanol, and a trivalent alcohol such as trimethylolpropane or glycerine, etc.

The catalyst includes a titanic ester compound or the like such as tetrabutyl titanate, tetrapropyl titanate, etc., a titanium compound or the like such as tin octylate, di-n-butyltinoxide, stannous chloride, stannous bromide, etc.

The ring-opening polymerization of lactone monomer can be carried out in a reactor having a thermometer, a stirrer, a distillation column, a tube for supplying nitrogen gas and a cooler, into which the above described lactone monomer and initiating agent are charged after adjusting the molar ratio of the monomer to the initiating agent, followed by supplying from 1 to 1000 ppm, and preferably from 5 to 100 ppm, of the catalyst, followed by raising the temperature to from 50 to 230°C, and preferably from 80 to 220°C, and allowing the reaction proceed for from 3 to 24 hours.

Furthermore, a polycaprolactone diol or triol having a number average molecular weight of from 300 to 3000 can be obtained by polymerization, in which divalent acids or trivalent acids such as adipic acid, sebacic acid, isophthalic acid, terephthalic acid, etc., are allowed to react with an equivalent amount of divalent alcohols such as ethylene glycol, diethylene glycol, propylene glycol, 1,3-butylene glycol, neopentyl glycol and cyclohexane dimethanol, etc., followed by adding a lactone monomer and an initiating agent.

Still further, a copolymer composed of the divalent alcohols and the diols and the lactone monomer, that is, the polycaprolactone diol or triol having a number average molecular weight of from 300 to 3000 can be obtained by the reaction, in which the above described divalent acids or trivalent acids and the divalent alcohol or trivalent alcohol are allowed to react while removing water generated in the condensation polymerization from the reactor vessel.

The content of the lactone component in the polycaprolactone diol or triol varies depending upon a kind of the initiating agent to be used, that is, a molecular weight of the initiating agent.

In the case of the polycaprolactone having a molecular weight of from 300 to 3000, the content of the lactone component is inevitably from 10 to 90 parts by weight.

Where the content of the lactone component is less than 10 parts by weight, the generation of water resistance in the coating layer is not sufficient.

On the other hand, where the content of the lactone component is more than 90 parts by weight, excellent solubility and low crystallinity thereof obtained by a copolymerization with divalent acids and diols are decreased, accordingly it is meaningless to use the divalent acids and divalent alcohol.

The chemical formulae of the above described polycaprolactone diol and triol are represented by $R\text{-}[\text{-}CO(CH_2)_5\text{-}O\text{-}]_n\text{-}(OH)_2$ or $R\text{-}[\text{-}CO(CH2)_5\text{-}O\text{-}]_n\text{-}(OH)_3$, respectively.

[wherein R is an alkyl group or alkylene group

Preferable specific examples of polycaprolactone diols include Placcel 205, Placcel 210, Placcel 220, Placcel 220AL.

Preferable specific examples of polycaprolactone triols include Placcel 308, Placcel 312, Placcel 308AL, Placcel 312AL, etc. They are manufactured by Daicel Chemical Industries, Ltd., on a commercial basis.

The number average molecular weight of the polycarbonate diol or the polycaprolactone diol or triol in the composition for coating is defined as a value calculated by the following formula:

$$\text{Number average molecular weight} = \frac{56.11 \times N \times 1000}{\text{hydroxyl value}}$$

The hydroxyl value of a polycarbonate diol or a polycaprolactone diol or triol is measured based on JIS K-1557-6.4.

N is the valence number of an initiating agent in the polycarbonate diol or the polycaprolactone diol or triol.

The third essential component (c) in the present composition for coating, that is, the hardener having a functional group capable of reacting with a hydroxyl group, includes an alkyl-etherized amino resin, a compound having an isocyanate group(s), a phenol resin, etc.

Particularly, the alkyl-etherized amino resin and the compound having an isocyanate group(s) is preferably used from the viewpoint of easily obtaining desirable outdoor durability and mechanical properties.

The alkyl-etherized amino resin includes, for example, a methyl-etherized melamine resin, a butyl-etherized melamine resin, an isobutyl-etherized melamine resin, a urea resin and a benzoguanamine resin, etc.

The mixing ratio of the hardener having a functional group capable of reacting with a hydroxyl group of the fluorine-containing copolymer having hydroxyl groups and the polycarbonate diol or the polycaprolactone diol or triol having a number average molecular weight of from 300 to 3000 is generally from 3 to 30, and preferably from 5 to 30 parts by weight, based on the total weight of the fluorine-containing copolymer and the polycarbonate diol or polycaprolactone diol or triol.

Where the mixing ratio of the hardener having a functional group capable of reacting with a hydroxyl group is less than 3 parts by weight, hardenability in the coating layer is low, and results in insufficient solvent resistance thereof.

On the other hand, where the mixing ratio of the hardener is more than 30 parts by weight, the hardness in the coating layer is considerably high and results in lowered mechanical properties thereof, whereby the effect intended in the present invention cannot be obtained.

In the case of coating thereof, a catalyst for hardening such as p-toluene sulfonic acid, dodecyl benzene sulfonic acid, lauryl benzene sulfonic acid and lauryl sulfonic acid, etc., can be optionally used.

Another example of a preferable hardener is a polyisocyanate compound.

Useful polyisocyanate compounds include a buret adduct such as 4,4′-diphenylmethanediisocyanate, xylylene diisocyanate, tolylene diisocyanate, 1,6-hexamethylene diisocyanate, 4,4′-methylene bis-(cyclohexylisocyanate), methylcyclohexane2,4(2,6)diiso cyanate, 1,3-(isocyanatemethyl)cyclohexane, 1,4-cyclohexane diisocyanate, 1-isocyanate-3-(isocyanatemethyl)-3,5,5-trimethylcyclohexane and or 2,2,4-trimethylhexamethylene diisocyanate and 2,4,4-trimethylhexamethylene diisocyanate, etc., an isocyanurate adduct, a polyalcohol adduct, etc.

Particularly, 1-isocyanate-3-(isocyanatemethyl)-3,5,5-trimethylcyclohexane, 2,2,4-trimethylhexamethylene diisocyanate and 2,4,4-trimethylhexamethylene diisocyanate, etc., which are a non-yellowing type diisocyanate compounds and have an excellent outdoor durability, are preferably used. The mixing ratio of the fluorine-containing copolymer having a hydroxyl group(s) and the polycarbonate diol or the polycaprolactone diol or triol having a number average molecular weight of from 300 to 3000 and the compound having isocyanate groups is preferably from 0.8/1 to 1.2/1 based on an equivalent ratio of NCO/OH.

Where the equivalent ratio of NCO/OH is less than 0.8/1, crosslinkability in the coating layer is low, and results in insufficient solvent resistance thereof.

On the other hand, where the equivalent ratio of NCO/OH is more than 1.2, the dryability in the coating layer is not only insufficient, but also results in tendency of yellowing in the coating layer upon exposure to photo-energy or thermal-energy atmosphere.

In the case of coating thereof, a catalyst for hardening process such as N,N′-endoethylene piperazine, di-n-butyltinlaurate, di-n-butyltinacetate, triethylamine, tetra(2-ethylhexyl)titanate, etc., can be optionally used.

In the case of preparing the present composition for coating, equipment such as is used in a conventional process, for example, a ball mill, a sand mill, a paint shaker and a triple-rolls machine, etc., can be used.

In the case of preparing the present composition for coating, inorganic coloring pigments, organic coloring dyes, glass flakes, aluminum flakes and other various additives in a conventional composition for coating such as a dispersion stabilizer, a viscosity controlling agent, a leveling agent and a defoaming agent, etc., can be mixed.

As regards the above described three main components, when a polyisocyanate compound is used as a hardener having a functional group capable of reacting with a hydroxyl group, the polyisocyanate compound should be mixed with two other components immediately before coating operation.

The above described composition for coating can be coated onto materials such as automobile bumpers, soft materials, and elastic materials such as internal parts for automobiles, and, in addition, can be coated onto structural materials for concrete structures or mortar cement structures by a conventional coating method such as air-spray gun coating, airless-spray gun coating and electrostatic coating process, etc.

After coating thereof, the coating layer is dried at ordinary temperatures for from 1 hour to several days or baked at approximately from 100 to 240° C for from 1 to 60 minutes, depending upon the hardener used, to obtain the extensible dried or baked layer having excellent flatness, excellent glossiness, and excellent outdoor durability.

The present invention is further illustrated below by examples and comparative examples.

**EXAMPLE 1**

100 parts by weight of a fluorine-containing copolymer having a hydroxyl group(s) ["Lumiflon" LF 200 manufactured and supplied by Asahi Glass Co., Ltd.] and 12.0 parts by weight of a polycarbonatediol having a number average molecular weight of 2000 ["Placcel" CD-220, manufactured and supplied by Daicel Chemical Industries, Ltd.] and 34.2 parts by weight(P/B = 0.4) of a white pigment [lutile-type titanium oxide, CR-90, manufactured and supplied by Ishihara Sangyo, Co.,Ltd.] and 20 parts by weight of xylene and 60 parts by weight of methylethyl ketone (MEK) were mixed and dispersed in a paint shaker for approximately 60 minutes, to obtain a white-colored and homogeneously dispersed composition for coating.

The composition was mixed with 13.6 parts by weight of a hardener having a functional group(s) capable of reacting with a hydroxyl group(s) ["Coronate EH", hexamethylene diisocyanate type hardener (NCO content = 21.3 %), manufactured and supplied by Nihon Polyurethane Industries, Ltd.], followed by being mixed sufficiently with 0.0005 parts by weight of dibutyl tin dilaurate ["SB-65", manufactured and supplied by Sankyo Yuki Gosei, Ltd.] to obtain a white-colored urethane composition for coating.

The urethane composition for coating was diluted with a thinner composed of 20/60 by weight of xylene/MEK in order to adjust to 20 seconds based on Ford cup viscosity #4(20° C).

The diluted composition and coating layer thereof was designated as P-1.

The diluted urethane composition for coating was coated with a spray gun onto a zinc phosphate plated rolled-steel plate (thickness of 0.3 mm), followed by being dried at ordinary temperatures (15-25° C) for one week.

## EXAMPLE 2 to 4

The same procedures as described in Example 1 were repeated, except that the mixing ratio as shown in Table-1 was used, to prepare the coated steel plates.

The diluted compositions and coating layers thereof were designated as P-2 to P-4.

## COMPARATIVE EXAMPLES 1 and 2

The same procedures as described in Example 1 were repeated, except that the mixing ratio as shown in Table-1 was used, to prepare the coated steel plates. The diluted compositions and coating layers thereof were designated as CP-1 and CP-2.

## EXAMPLE 5

The same procedures as described in Example 1 were repeated, except that n-butanol was used in place of methylethyl ketone (MEK) and 6.2 parts of "Cymel 303" (manufactured and supplied by Mitsui Toatsu Chemical, Ltd.) was used in place of "Coronate EH" and 0.005 parts by weight of "Catalyst 6000" (a catalyst for hardening melamine resins, manufactured and supplied by Mitsui Toatsu Chemical, Ltd.) to prepare a white colored urethane composition for coating.

The white colored urethane composition for coating was diluted with a thinner composed of 20/60 by weight of xylene/n-butanol to adjust the same viscosity in Example 1.

The diluted composition and coating layer thereof was designated as P-5.

The diluted composition was coated with a spray gun onto a zinc phosphate plated rolled-steel plate (thickness of 0.3 mm), followed by baking at a temperature of 140° C for approximately 20 minutes.

## EXAMPLE 6

The same procedures as described in Example 1 was repeated, except that the mixing ratio was used as shown in Table-1.

The diluted composition and coating layer thereof was designated as P-6.

## EXAMPLE 7

The same procedures as described in Example 1 were repeated, except that a polycaprolactone diol having a number average molecular weight of 850 ["Placcel 308", manufactured and supplied by Daicel] was used in place of the polycarbonate diol[ "Placcel CD-220"] and 36.6 parts was used in place of 32.2 parts by weight of CR-90, to obtain a white-colored and homogeneously dispersed composition for coating. The same procedures as described in Example 1 were repeated, except that 19.5 parts by weight of "Coronate H" was used in place of 13.6 parts by weight, to obtain a white-colored urethane composition for coating.

The diluted composition and coating layer thereof was designated as P-7.

The same procedures as described in Example 1 were repeated to prepare a plate coated with the white-colored urethane composition, followed by being dried at ordinary temperatures for 1 week.


**COMPARATIVE EXAMPLES 3**

The same procedures as described in Example 7 were repeated, except that the mixing ratio as shown in Table 1 was used, to prepare the coated steel plates. The diluted composition and coating layer thereof was designated as CP-3.


**EXAMPLE 8 to 13**

The same procedures as described in Example 7 were repeated, except that mixing ratios as shown in Table 2 were used, respectively, to prepare the coated plates, followed by being dried or baked.

The diluted compositions and coating layers thereof were designated as P-8 to P-13.


**COMPARATIVE EXAMPLES 4 and 5**

The same procedures as described in Example 7 were repeated, except that the mixing ratios as shown in Table 2 were used, respectively, to prepare the coated plates, followed by being dried or baked.

The diluted composition and coating layers thereof were designated as CP-4 to CP-5.


**COMPARATIVE EXAMPLES 6**

The same procedures as described in Example 13 were repeated, except that the mixing ratio as shown in Table 2 was used, to prepare the coated steel plates. The diluted composition and coating layer thereof was designated as CP-6.

The specifications of the materials set forth in the Tables 1, 2, 3, and 4, and mechanical or chemical properties are shown as follows.

*Lumiflon LF 200:

a hydroxyl value of 32 mg KOH/g and a xylene solution of a fluorine-containing copolymer having hydroxyl groups and being 60 % by weight non-volatile

*Lumiflon LF 700:

a hydroxyl value of 32 mg KOH/g and a xylene solution of a fluorine-containing copolymer having hydroxyl groups and being 60 % by weight non-volatile

*Placcel CD-220HL:

a hydroxyl value of 56 mg KOH/g

*Placcel CD-220PL:

a hydroxyl value of 56 mg KOH/g

*Placcel CD-210HL:

a hydroxyl value of 112 mg KOH/g

*Placcel CD-205HL:

a hydroxyl value of 2.25 mg KOH/g

"Placcel"s are all liquid polycarbonate diols.

*Placcel 308:

a polycaprolactone triol having molecular weight of 850

*Placcel 312:

a polycaprolactone triol having molecular weight of 1200

*Placcel 312AL:

a polycaprolactone triol having molecular weight of 1200 modified with adipic acid

7

EP 0 416 501 A2

*Placcel 220AL:
a polycaprolactonediol having molecular weight of 2000 modified with adipic acid
*Coronate EH:
an isocyanurate type polyisocyanate of hexamethylene diisocyanate having an NCO content of 21.3 %
*Cymel 303:
a methylated-melamine resin
*DBTDL:
dibutyltin dilaurate
*Pencil Hardness:
based on JIS K5400, 6.14 by using Mitsubishi Pencil "Hi-Uni"
*Stickiness resistance:
based on JIS K5400, 6.15
*Impact resistance:
based on JIS K5400, 6.13 B method with a test piece having 1/2 inch x 500 g x 50 cm$^2$
*Bending resistance:
based on JIS K5400, 6.16 with a test piece having 2 mm
*Solvent resistance:
based on surface visual observation eyes after rubbing tests of 100 times
*Staining resistance:
based on surface visual observation after wiping with toluene 24 hours after coloring by a black-colored feltpen-ink using xylene
*Chemicals resistance:
based on surface visual observation of coating layer after immersing at temperature of 20°C for 24 hours
*Film properties:
based on JIS K7113

While the invention has been described in detail and with reference to specific embodiments thereof, it will be apparent to one skilled in the art that various changes and modifications can be made therein without departing from the spirit and scope thereof.

Table-1

|  | Example | | | | | | Comparative Example | | |
|---|---|---|---|---|---|---|---|---|---|
|  | 1 | 2 | 3 | 4 | 5 | 6 | 1 | 2 | 3 |
| Sample No. | P-1 | P-2 | P-3 | P-4 | P-5 | P-6 | CP-1 | CP-2 | CP-9 |
| Lumiflon LF200 | 100 | 100 | 100 | 100 | 100 |  | 100 | 100 | 100 |
| Lumiflon LF700 |  |  |  |  |  | 100 |  |  |  |
| Placcel CD220HL | 12 |  |  |  | 12 | 12 |  |  |  |
| Placcel CD220PL |  | 12 |  |  |  |  |  |  |  |
| Placcel CD210HL |  |  | 12 |  |  |  |  |  |  |
| Placcel CD-205HL |  |  |  | 12 |  |  |  |  |  |
| Coronate EH | 13.6 | 13.6 | 15.9 | 20.7 |  |  | 11.3 | 19.1 |  |
| Cymel 303 |  |  |  |  | 6.2 | 4.3 |  |  | 3.6 |
| Typake CR-90 | 34.2 | 34.2 | 35.2 | 37.1 | 31.3 | 30.5 | 28.5 | 47.6 | 25.4 |
| DBTDL | 0.0005 | 0.0005 | 0.0005 | 0.0005 | 0.0005 | 0.0005 | 0.0005 | 0.0005 | 0.0005 |
| Catalyst 6000 |  |  |  |  |  | 0.3 |  |  | 0.3 |
| Xylene | 20 | 20 | 20 | 20 | 20 | 20 | 20 | 20 | 20 |
| Methylethyl ketone | 60 | 60 | 60 | 60 |  |  | 60 | 60 |  |
| n-Butanol |  |  |  |  | 60 | 60 |  |  | 60 |

8

Table-2

| Sample No. | Example | | | | | | | Comparative Example | | |
|---|---|---|---|---|---|---|---|---|---|---|
| | 7 | 8 | 9 | 10 | 11 | 12 | 13 | 4 | 5 | 6 |
| | P-7 | P-8 | P-9 | P-10 | P-11 | P-12 | CP-13 | CP-4 | CP-5 | CP-6 |
| Lumiflon LF200 | 100 | 100 | 100 | 100 | 100 | | 100 | 100 | | 100 |
| Lumiflon LF700 | | | | | | 100 | | | 100 | |
| Placcel 308 | 12 | | | | 30 | 12 | 12 | | | |
| Placcel 312 | | 12 | | | | | | | | |
| Placcel 312AL | | | 12 | | | | | | | |
| Placcel 220AL | | | | 12 | | | | | | |
| Coronate EH | 19.5 | 16.9 | 16.9 | 13.6 | 31.8 | 17.0 | | 11.3 | 8.8 | |
| Cymel 303 | | | | | | | 6.2 | | | 3.6 |
| Typake CR-90 | 36.6 | 35.6 | 35.6 | 34.2 | 48.7 | 33.6 | 31.3 | 28.5 | 25.5 | 25.4 |
| DBTDL | 0.0005 | 0.0005 | 0.0005 | 0.0005 | 0.0005 | 0.0005 | 0.0005 | 0.0005 | 0.0005 | 0.0005 |
| Catalyst 6000 | | | | | | | 0.3 | | | 0.3 |
| Xylene | 20 | 20 | 20 | 30 | 60 | 20 | 20 | 20 | 60 | 20 |
| Methylethyl ketone | 60 | 60 | 60 | 60 | 80 | 20 | | 60 | 20 | |
| n-Butanol | | | | | | | 60 | | | 60 |

EP 0 416 501 A2

Table-3

| | Example | | | | | | Comparative Example | | |
|---|---|---|---|---|---|---|---|---|---|
| | 1 | 2 | 3 | 4 | 5 | 6 | 1 | 2 | 3 |
| Sample No. | P-1 | P-2 | P-3 | P-4 | P-5 | P-6 | CP-1 | CP-2 | CP-9 |
| Coating Layer Thickness ($\mu$) | 12 | 12 | 13 | 14 | 13 | 14 | 12 | 13 | 12 |
| Pencil Hardness (scratch test) | B | 2B | HB | HB | 3B | B | H | 3B | H |
| Stickiness | 100/100 | 100/100 | 100/100 | 100/100 | 100/100 | 100/100 | 100/100 | 100/100 | 100/100 |
| Impact Strength | Pass | Pass | Pass | Pass | Pass | Pass | Pass | Pass | Pass |
| Bending Resistance:(20 °C) | Pass | Pass | Pass | Pass | Pass | Pass | Pass | Pass | Pass |
| :(-20 °C) | Pass | Pass | Pass | Pass | Pass | Pass | Crack | Crack | Crack |
| Solvent Resistance:Xylene | Pass | Pass | Pass | Pass | Pass | Pass | Blushing | Pass | Pass |
| :MEK | Pass | Pass | Pass | Pass | Pass | Pass | Pass | Crack | Blushing |
| Staining Resistance | Pass | Pass | Pass | Pass | Pass | Pass | Crack | no Pass | Pass |
| Chemical Resistance:5%HCL | Pass | Pass | Pass | Pass | Pass | Pass | Pass | Pass | Sink Mark |
| :5%NaOH | Pass | Pass | Pass | Pass | Pass | Pass | Pass | Pass | Blushing |
| Film Properties | | | | | | | | | |
| :Strength at Break(kgf/cm2) | 187 | 163 | 233 | 248 | 186 | 189 | 373 | 42 | 398 |
| :Elongation at Break(%) | 158 | 162 | 108 | 164 | 247 | 146 | <5 | 372 | <5 |

10

Table-4

| | Example | | | | | | | Comparative Example | | |
|---|---|---|---|---|---|---|---|---|---|---|
| | 7 | 8 | 9 | 10 | 11 | 12 | 13 | 4 | 5 | 6 |
| Sample No. | P-7 | P-8 | P-9 | P-10 | P-11 | P-12 | P-13 | CP-4 | CP-5 | CP-6 |
| Coating Layer Thickness ($\mu$) | 10 | 12 | 13 | 12 | 12 | 13 | 10 | 13 | 12 | 12 |
| Pencil Hardness (scratch test) | HB | HB | B | 2B | 2B | HB | HB | H | HB | H |
| Stickiness | 100/100 | 100/100 | 100/100 | 100/100 | 100/100 | 100/100 | 100/100 | 100/100 | 100/100 | 40/100 |
| Impact Strength | Pass | Pass | Pass | Pass | Pass | Pass | Pass | Pass | Pass | Pass |
| Bending Resistance:(20 °C) | Pass | Pass | Pass | Pass | Pass | Pass | Pass | Pass | Pass | Pass |
| :(-20°C) | Pass | Pass | Pass | Pass | Pass | Pass | Pass | Crack | Pass | Crack |
| Solvent Resistance:Xylene | Pass | Pass | Pass | Pass | Pass | Pass | Pass | Pass | Pass | Pass |
| :MEK | Pass | Pass | Pass | Pass | Pass | Pass | Pass | Pass | Pass | Pass |
| Staining Resistance | Pass | Pass | Pass | Pass | Pass | Pass | Pass | Pass | Pass | Pass |
| Chemical Resistance:5%HCL | Pass | Pass | Pass | Pass | Pass | Pass | Pass | Pass | Pass | Sink Mark |
| :5%NaOH | Pass | Pass | Pass | Pass | Pass | Pass | Pass | Pass | Pass | Blushing |
| Film Properties | | | | | | | | | | |
| :Strength at Break(kgf/cm2) | 264 | 243 | 226 | 182 | 107 | 173 | 268 | 373 | 288 | 398 |
| :Elongation at Break(%) | 107 | 162 | 110 | 145 | 187 | 63 | 42 | <5 | 10 | <5 |

EP 0 416 501 A2

**Claims**

1. A composition for coating,
said composition consisting essentially of a mixture which comprises:
    (a) a fluorine-containing copolymer having hydroxyl groups
    (b) a polycarbonate diol having a number average molecular weight of from 300 to 3000, and
    (c) a hardener having at least one functional group capable of reacting with a hydroxyl group.
2. A composition for coating,
said composition consisting essentially of a mixture which comprises:
    (a) a fluorine-containing copolymer having hydroxyl groups
    (b) a polycaprolactone diol or triol having a number average molecular weight of from 300 to 3000, and
    (c) a hardener having at least one functional group capable of reacting with a hydroxyl group.
3. A composition for coating as set forth in claim 1, containing from 5 to 50 parts by weight of said polycarbonate diol per 100 parts by weight of said fluorine-containing copolymer.
4. A composition for coating as set forth in claim 1, wherein said polycarbonate diol is liquid or an easily liquefiable solid at ordinary temperatures.
5. A composition for coating as set forth in claim 1, wherein said hardener having at least one functional group capable of reacting with a hydroxyl group is an alkyl-etherified amino resin.
6. A composition for coating as set forth in claim 1, wherein said hardener having at least one functional group capable of reacting with a hydroxyl group is a compound having isocyanate groups.
7. A composition for coating as set forth in claim 2, containing from 5 to 50 parts by weight of said polycaprolactone diol or said triol per 100 parts by weight of said fluorine-containing copolymer.
8. A composition for coating as set forth in claim 2, wherein said polycaprolactone diol or said triol is a liquid or an easily liquefiable solid at ordinary temperatures.
9. A composition for coating as set forth in claim 2, wherein said hardener having at least one functional group capable of reacting with a hydroxyl group is an alkyl-etherified amino resin.
10. A composition for coating as set forth in claim 2, wherein said hardener having at least one functional group capable of reacting with a hydroxyl group is a compound having isocyanate groups.
11. A composition for coating as set forth in claim 1, wherein said hardener having a functional group capable of reacting with a hydroxyl group is 1-isocyanate-3-(isocyanatemethyl)-3,5,5-trimethylcyclohexane.
12. A composition for coating as set forth in claim 2, wherein said hardener having a functional group capable of reacting with a hydroxyl group is 1-isocyanate-3-(isocyanatemethyl)-3,5,5-trimethylcyclohexane.
13. A composition for coating as set forth in claim 5, wherein said hardener having a functional group capable of reacting with a hydroxyl group is 1-isocyanate-3-(isocyanatemethyl)-3,5,5-trimethylcyclohexane.
14. A coating layer
formed from a composition consisting essentially of a mixture which comprises
    (a) a fluorine-containing copolymer having hydroxyl groups
    (b) a polycarbonate diol, a polycaprolactone diol, or a polycaprolactone triol, having a number average molecular weight of from 300 to 3000, and
    (c) a hardener having at least one functional group capable of reacting with a hydroxyl group.
15. A coating layer as set forth in claim 15, containing from 5 to 50 parts by weight of said component (b) per 100 parts by weight of said fluorine-containing copolymer.
16. A coating layer as set forth in claim 1, wherein said component (b) is liquid or an easily liquefiable solid at ordinary temperatures.
17. A coating layer as set forth in claim 14, wherein said hardener having at least one functional group capable of reacting with a hydroxyl group is an alkyl-etherified amino resin.
18. A coating layer as set forth in claim 14, wherein said hardener having at least one functional group capable of reacting with a hydroxyl group is a compound having isocyanate groups.
19. A coating layer as set forth in claim 14, wherein said hardener having a functional group capable of reacting with a hydroxyl group is 1-isocyanate-3-(isocyanatemethyl)-3,5,5-trimethylcyclohexane.